Europäisches Patentamt

**European Patent Office**

**Office européen des brevets**

(11) Veröffentlichungsnummer: **0 140 036**
**B1**

(12) **EUROPÄISCHE PATENTSCHRIFT**

(45) Veröffentlichungstag der Patentschrift:
18.05.88

(51) Int. Cl.⁴: **B 25 J 19/06**

(21) Anmeldenummer: 84110470.6

(22) Anmeldetag: 03.09.84

(54) Sicherheitseinrichtung für Industrieroboter.

(30) Priorität: 20.09.83 DE 3333979

(43) Veröffentlichungstag der Anmeldung:
08.05.85 Patentblatt 85/19

(45) Bekanntmachung des Hinweises auf die Patenterteilung:
18.05.88 Patentblatt 88/20

(84) Benannte Vertragsstaaten:
AT BE CH DE FR GB IT LI NL SE

(56) Entgegenhaltungen:
DE-A-2 749 003
DE-A-3 241 132
FR-A-1 336 799
FR-A-2 369 065
FR-A-2 434 426
GB-A-2 068 891
US-A-3 952 880
US-A-4 328 621

(73) Patentinhaber: Siemens Aktiengesellschaft Berlin
und München, Wittelsbacherplatz 2, D-8000
München 2 (DE)

(72) Erfinder: Kohler, Gerd, Dipl.- Ing., Romanstrasse
1a, D-8000 München 19 (DE)
Erfinder: Burger, Rudolf, Sipplingerstrasse 12,
D-8000 München 60 (DE)

EP 0 140 036 B1

## Beschreibung

Die Erfindung betrifft eine Sicherheitseinrichtung für Industrieroboter zum Schutz vor Kollisionen eines an dem Industrieroboter angebrachten Werkzeuge.

Beim Betrieb und inebesondere beim Programmieren von Industrierobotern kann es durch Fehler der Steuerung oder durch Bedienfehler des Programmierers zur Kollisionen eines an dem Industrieroboter angebrachten Werkzeugs mit der Peripherie kommen. Durch diese Kollisionen können sowohl Beschädigungen an dem Werkzeug, wie z. B. einem Greifer oder einer Schweißzange, als auch Beschädigungen an der Peripherie, wie z. B. an einer Vorrichtung, auftreten.

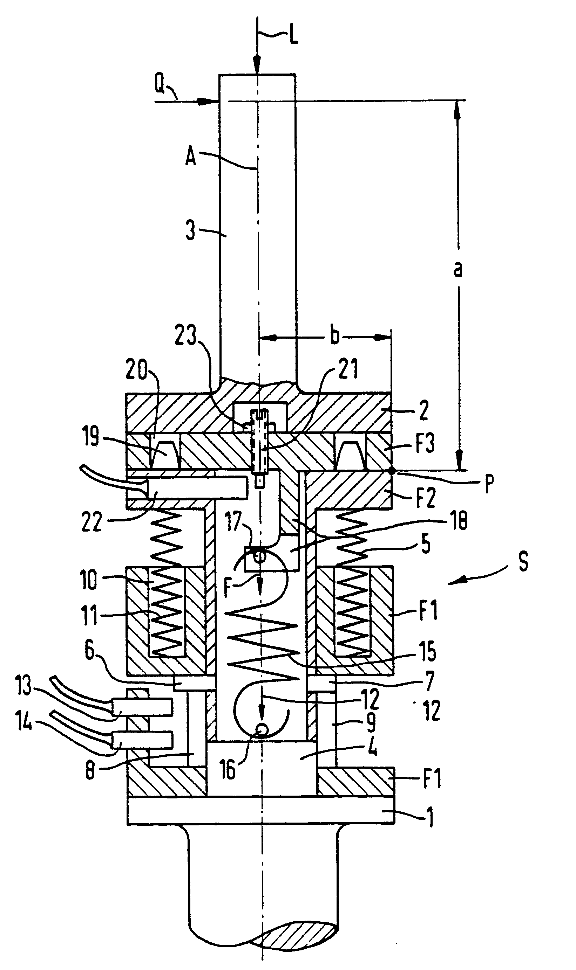

Aus dem Aufsatz "Sicherheitssysteme bei Industrierobotern" in der Zeitschrift "Technische Überwachung", Nr. 5, Mai 1981, S. 211 - 215, insbesondere Bild 4, ist eine Sicherheitseinrichtung der eingangs genannten Art bekannt, welche einen gewissen Schutz bei Kollisionen eines an einem Industrieroboter angebrachten Werkzeugs bietet. Hierzu wird das Werkzeug mittels Tellerfederpaketen an eine Achse des Industrieroboters angeflanscht. Diese Anordnung ermöglicht dann eine Überlastabschaltung bei seitlichem Anfahren. Berührt das Werkzeug ein Hindernis, so hebt ab einer bestimmten Querkraft der Flansch einseitig ab. Dadurch verschiebt sich die Mitte des Flansches in axialer Richtung. Diese Verschiebung wird dann über einen federbelasteten Stößel auf einen Grenztaster übertragen, der bei seiner Betätigung den Industrieroboter abschaltet. Reaktionskräfte, die im Falle einer Kollision senkrecht auf die Flanschfläche einwirken, erzeugen jedoch kein Kippmoment, d.h. die bekannte Sicherheitseinrichtung versagt bei derartigen Kollisionen.

Aus der DE-A-2 749 603 ist eine weitere Sicherheitseinrichtung für Industrieroboter zum Schutz vor Kollisionen eines an dem Industrieroboter angebrachten Werkzeugs bekannt, bei welcher die Verbindung zwischen einem einstellbaren Auslegearm des Industrieroboters und dem mit einer Flanschbefestigung angebrachten Werkzeug über zwei nachgiebig miteinander verbundene Flansche erfolgt. Der erste dieser beiden Flansche ist durch die Kraft einer vorgespannten Druckfeder derart gegen den zweiten Flansch gedrückt, daß bei einer übermäßigen Einwirkung einer Längs- und/oder Querkraft auf das Werkzeug ein mit dem ersten Flansch verbundener Schaltbolzen gekippt, gedreht oder axial bewegt wird und eine Schalteinrichtung zum Ausschalten des Industrieroboters betätigt. Bei der bekannten Sicherheitseinrichtung ist sowohl die maximal zulässige Querkraft als auch die maximal zulässige Längskraft von der Vorspannung der genannten Druckfeder abhängig.

Der Erfindung liegt die Aufgabe zugrunde, eine Sicherheitseinrichtung für Industrieroboter zu schaffen, die bei Kollisionen eines an dem Industrieroboter angebrachten Werkzeugs unabhängig von der Richtung der auf das Werkzeug ausgeübten Reaktionskraft den Industrieroboter schnell und zuverlässig ausschaltet.

Die Lösung dieser Aufgabe erfolgt duch eine Sicherheitseinrichtung für Industrieroboter zum Schutz vor Kollisionen eines an dem Industrieroboter angebrachten Werkzeugs, bei welcher

- die Verbindung zwischen Industrieroboter und Werkzeug über mindestens drei nachgiebig miteinander verbundene Flansche erfolgt,
- zwei der Flansche ab einer bestimmten auf das Werkzeug ausgeübten Querkraft relativ zueinander kippbar sind,
- zwei andere der Flansche ab einer bestimmten Kraft mindestens einer vorgespannten Druckfeder in axialer Richtung realtiv zueinander verschiebbar sind,
- durch eine Kippbewegung eine erste Schalteinrichtung zum Ausschalten des Industrieroboters betätibar ist und
- durch eine axiale Verschiebung eine weitere Schalteinrichtung zum Ausschalten des Industrieroboters betätibar ist.

Bei der erfindungsgemäßen Sicherheitseinrichtung sind für die Verbindung zwischen Industrieroboter und Werkzeug also mindestens drei Flansche vorgesehen, wobei zwei dieser Flansche relativ zueinander kippbar sind und bei einem seitlichen Anfahren des Werkzeugs durch die Kippbewegung eine erste Schalteinrichtung zum Ausschalten des Industrieroboters betätigen. Außerdem sind zwei andere der Flansche gegen die Kraft mindestens einer vorgespanten Druckfeder in axialer Richtung relativ zueinander verschiebbar, wobei durch die axiale Verschiebung im Falle einer Kollision mit senkrecht auf die Flanschfläche einwirkender Reaktionskraft eine weitere Schalteinrichtung zum Ausschalten des Industrieroboters betätigt wird. Die erfindungsgemäße Sicherheitseinrichtung bietet somit einen Schutz bei seitlichem und bei senkrechtem Anfahren des Werkzeugs, wobei die Grenzwerte der zulässigen Querkraft und der zulässigen Querkraft und der zulässigen Längskraft getrennt vorgegeben und den jeweiligen Gegebenheiten optimal angepaßt werden können.

Gemäß einer bevorzugten Ausgestaltung der Erfindung ist vorgesehen, daß ein erster Flansch eine axiale Führungsbohrung besitzt, in welcher ein zylindrischer Fortsatz eines zweiten Flansches axial verschiebbar angeordnet ist. Hierdurch wird bei geringem Platzbedarf eine stabile Führung des axial verschiebbaren zweiten Flansches erreicht. Dabei weist der zylindrische Fortsatz des zweiten Flansches vorzugsweise mindestens einen radialen Vorsprung auf, welcher in einem axialen Schlitz des zweiten Flansches geführt ist.

Der radiale Vorsprung, der zweckmäßigerweise durch einen in dem zylindrischen Fortsatz befestigten Stift gebildet ist, wirkt dabei als Drehsicherung für den zweiten Flansch und begrenzt außerdem dessen axialen Hub. Somit kann auch durch die Zuordnung von radialem Vorsprung und axialem Schlitz die Vorspannung mindestens einer zwischen dem ersten Flansch und dem zweiten Flansch angeordeten Druckfeder festgelegt werden.

Entsprechend einer weiteren Ausgestaltung der Erfindung sind zwischen dem ersten Flansch und dem zweiten Flansch in gleichmäßiger Teilung in Umfangsrichtung mindestens vier vorgespannte Druckfedern angeordnet. Die Druckfedern sind dabei vorzugsweise in Sacklöchern des ersten Flansches und/oder des zweiten Flansches gehalten. Durch die Verwendung mehrerer Druckfedern und deren Anordnung in Sacklöchern wird eine besonders kompakte Bauweise ermöglicht.

Weiterhin ist es zweckmäßig, wenn die weitere Schalteinrichtung zum Ausschalten des Industrieroboters in dem ersten Flansch befestigt und durch eine axiale Verschiebung des zylindrischen Fortsatzes des zweiten Flansches betätigbar ist. Die weitere Schalteinrichtung kann dabei als induktiver Näherungsschalter ausgebildet sein. In diesem Fall kann dann auf besonders einfache Weise die weitere Schalteinrichtung durch den radialen Vorsprung des zylindrischen Fortsatzes des zweiten Flansches betätigt werden. Der Platzbedarf der gesamten Sicherheitseinrichtung kann ferner dadurch weiter reduziert werden, daß der zylindrische Fortsatz des zweiten Flansches als Hohlzylinder ausgebildet wird, in welchem eine vorgespannte, an dem zylindrischen Fortsatz und an einem kippbaren dritten Flansch angreifende Zugfeder angeordnet ist. Die Verwendung einer Zugfeder zur Erzeugung der Haltekraft zwischen dem zweiten und dem kippbaren dritten Flansch hat außerdem den Vorteil, daß das Werkzeug selbsttätig in seine Ausgangsposition zurückschnappt, sobald es aus einer Kollisionsposition gefahren wird. Würde diese Haltekraft durch Magnete oder Vakuumkammern erzeugt, so würde das Werkzeug nach einem seitlichen Anfahren und nach dem Kippen des dritten Flansches schlaff am Industrieroboter hängen.

Die Zugfeder greift dabei vorzugsweise an einem in den Hohlzylinder regenden Spannbügel des kippbaren dritten Flansches an. Außerdem ist es besonders günstig, wenn der Vorspannungsweg der Zugfeder im Vergleich zu ihrer zusätzlichen Dehnung bei einer Kippbewegung des dritten Flansches groß ist. Daraus ergibt sich, daß bei einem seitlichen Anfahren des Werkzeugs die auf das Werkzeug ausgeübte Reaktionskraft während des Kippvorgangs nahezu konstant bleibt.

En sprechend einer weiteren Ausgestaltung der Erfindung ist vorgesehen, daß in dem zweiten Flansch mindestens zwei Fixierstifte befestigt sind, deren konisch verjüngte Enden in Fixierbohrungen des kippbaren dritten Flansches eingreifen. Dadurch wird ohne Beeinträchtigung einer möglichen Kippbewegung eine eindeutige Lage des zweiten Flansches und des dritten Flansches zueinander hergestellt.

Weiterhin ist es zweckmäßig, wenn die Schalteinrichtung zum Ausschalten des Industrieroboters in dem zweiten Flansch befestigt und durch einen mittig in dem kippbaren dritten Flansch befestigten Betätigungsstift betätigbar ist. Dabei kann der Betätigungsstift in axialer Richtung einstellbar in dem kippbaren dritten Flansch befestigt sein. Außerdem kann die Schalteinrichtung ebenso wie die weitere Schalteinrichtung als induktiver Näherungsschalter ausgebildet sein.

Insbesondere für die Umrüstung von Industrierobotern ohne Sicherheitseinrichtung ist es zweckmäßig, wenn der erste Flansch unmittelbar mit einem Flansch des Industrieroboters verbunden ist. Dementsprechend kann der kippbare dritte Flansch unmittelbar mit einem Flansch des Werkzeugs verbunden sein. Somit ist es möglich, die gesamte kompakt ausgebildete Sicherheitseinrichtung zwischen die Flansche von Industrieroboter und Werkzeug einzubringen.

Ein Ausfürungsbeispiel der Erfindung ist in der Zeichnung dargestellt und wird im folgenden näher beschrieben.

Die Zeichnung zeigt einen Längsschnitt durch eine insgesamt mit S bezeichnete Sicherheitseinrichtung, welche zwischen den Flansch 1 eines Industrieroboters und den Flansch 2 eines Werkzeugs 3 eingefügt ist. Bei dem Werkzeug 3 handelt es sich beispielsweise um einen Greifer. Die Sicherheitseinrichtung S umfaßt dabei einen mit dem Flansch 1 des Industrieroboters verschraubten ersten Flansch F1, einen relativ zu dem ersten Flansch F1 axial verschiebbaren zweiten Flansch F2 und einen relativ zum zweiten Flansch F2 kippbaren dritten Flensch F3, wobei der kippbare dritte Flansch F3 mit dem Flansch 2 des Werkzeugs 3 verschraubt ist.

Der erste Flansch F1 besitzt eine axiale Führungsbohrung 4 in welcher ein zylindrischer Fortsatz 5 des zweiten Flansches F2 axial verschiebbar angeordnet ist. Zur Drehsicherung des zweiten Flansches F2 und zur Begrenzung seines axialen Hubes dienen zwei in dem zylindrischen Fortsatz 5 befestigte Stifte 6 und 7, deren radial vorspringende Enden in entsprechenden Schlitzen 8 bzw. 9 des ersten Flansches F1 geführt sind. In die dem zweiten Flansch F2 zugewandte Stirnfläche des ersten Flansches F1 sind in gleichmäßiger Teilung in Umfangsrichtung insgesamt vier Sacklöcher 10 eingebracht, in welchen jeweils eine vorgespannte Druckfeder 11 angeordnet ist. Die aus den Sacklöchern 10 überstehenden Enden der Druckfedern 11 stützen sich auf der zugewandten Stirnfläche des zweiten Flansches F2 ab und halten durch ihre Vorspannung den zweiten Flansch F2 in einer definierten Lage zum ersten Flansch F1 und damit auch zum Flansch 1 des Industrieroboters. Die Vorspannung der Druckfedern 11 wird dabei durch die Begrenzung des axialen Hubes des zweiten Flansches F2 über die in den axialen Schlitzen 8 und 9 geführten Stifte 6 bzw. 7 erzeugt und aufrechterhalten. Eine gegen die Kraft der Druckfedern 11 in Richtung des Pfeiles 12 ausgeführte axiale Hubbewegung des zweiten Flansches F2 kann durch die entsprechende Bewegung des Stiftes 6 und im ersten Flansch F1 fest angeordnete induktive Näherungsschalter 13 und 14 erfaßt werden.

Innerhalb des als Hohlzylinder ausgebildeten zylindrischen Fortsatzes 5 ist eine vorgespannte Zugfeder 15 angeordnet, deren Enden in einen Querbolzen 16 des zylindrichen Fortsatzes 5 und einen Querbolzen 17 eingehängt sind, wobei der Querbolzen 17 an einem in den zylindrischen Fortsatz 5 ragenden Spannbügel 18 des dritten Flansches F3 befestigt ist. Durch die Kraft der Zugfeder 17 werden somit der zweite Flansch F2 und der kippbare dritte Flansch F3 gegeneinander gezogen. Im übrigen wird über beispielsweise vier Fixierstifte 19, die fest im zweiten Flansch F2 stecken und mit ihren konisch verjüngten Enden in entsprechende Fixierbohrungen 20 des dritten Flansches F3 eingreifen eine eindeutige Lage des zweiten Flansches F2 und des dritten Flansches F3 zueinander hergestellt. Die Befestigung der Fixierstifte 19 im zweiten Flansch F2 ist in der Zeichnung nicht zu erkennen, da die Fixierstifte 19 versetzt zu den Druckfedern 11 und damit auch zur Schnittebene versetzt angeordnet sein sollen. Eine Kippbewegung des kippbaren dritten Flansches F3 kann durch die entsprechende axiale Bewegung eines mittig im dritten Flansch F3 angeordneten Betätigungsstiftes 21 und einen im zweiten Flansch F2 fest angeordneten induktiven Näherungsschalter 22 erfaßt werden. Der als Gewindestift ausgebildete Betätigungsstift 21 ist dabei in axieler Richtung einstellbar und durch eine Kontermutter 23 gesichert.

Im Falle einer Kollision des Werkzeugs 3 mit der Peripherie des Industrieroboters wird auf das Werkzeug 3 eine Reaktionskraft ausgeübt, die als Querkraft Q senkrecht zur Achse A der gesamten Einrichtung wirkt, als Längskraft L in Richtung der Achse A wirkt oder Komponenten in Quer-und Längsrichtung besitzt. Greift die Querkraft Q z. B im Abstand a zur Trennebene zwischen dem zweiten Flansch F2 und dem dritten Flansch F3 am Werkzeug 3 an, so wird in bezug auf den Kipp-Punkt P ein Moment $M1 = Q \cdot a$ erzeugt. Diesem Moment wirkt ein Moment $M2 = F \cdot b$ entgegen, wobei mit F die Kraft der vorgespannten Zugfeder 15 und mit b der Abstand zwischen der Achse A und dem Kipp-Punkt P bezeichnet ist. Wird nun das Moment M1 größer als das Moment M2, so kippt der dritte Flansch F3 um den Kipp-Punkt P von dem zweiten Flansch F2 weg. Durch diese Kippbewegung wird dann der als Schalteinrichtung zum Ausschalten des Industrieroboters dienende induktive Näherungsschalter 22 betätigt. Beispielsweise löst der Signalwechsel des induktiven Näherungsschalters 22 beim Kippen des dritten Flansches F3 ein "NOT-AUS" des Industrieroboters aus.

Greift an dem Werkzeug 3 eine Längskraft L an, so wird der zweite Flansch F2 in axialer Richtung ausgelenkt, sofern die Längskraft L größer ist als die in entgegengesetzter Richtung wirkende Kraft der vier vorgespannten Druckfedern 11. Die axiale Auslenkung des zweiten Flansches F2 wird dabei durch die induktiven Näherungsschalter 13 und 14 überwacht. Hierbei übernimmt der induktive Näherungsschalter 13 eine Abfragefunktion, während der induktive Näherungsschalter 14 als weitere Schalteinrichtung zum Ausschalten des Industrieroboters dient. Beispielsweise löst der Signalwechsel des induktiven Näherungsschalters 14 bei einer entsprechenden Auslenkung des zweiten Flansches F2 ein "NOT-AUS" des Industrieroboters aus.

**Patentansprüche**

1. Sicherheitseinrichtung für Industrieroboter zum Schutz vor Kollisionen eines an dem Industrieroboter angebrachten Werkzeugs, wobei

- die Verbindung zwischen Industrieroboter und Werkzeug über mindestens drei nachgiebig miteinander verbundene Flansche (F1, F2, F3) erfolgt,
- zwei der Flaneche (F2, F3) ab einer bestimmten auf das Werkzeug (3) ausgeübten Querkraft (Q) relativ zueinander kippbar sind,
- zwei andere der Flansche (F1, F2) ab einer bestimmten auf das Werkzeug (3) ausgeübten Längskraft (L) gegen die Kraft mindestens einer vorgespannten Druckfeder (11) in axialer Richtung relativ zueinander verschiebbar sind,
- durch eine kippbewegung eine erste Schalteinrichtung zum Ausschalten des Industrieroboters betätigbar ist und
- durch eine axiale Verschiebung eine weitere Schalteinrichtung zum Ausschalten des Industrieroboters betätigbar ist.

2. Sicherheitseinrichtung nach Anspruch 1, dadurch gekennzeichnet, daß ein erster Flansch (F1) eine axiale Führungsbohrung (4) besitzt, in welcher ein zylindrischer Fortsatz (5) eines zweiten Flansches (F2) axial verschiebbar angeordnet ist.

3. Sicherheitseinrichtung nach Anspruch 2, dadurch gekennzeichnet, daß der zylindrische Fortsatz (5) des zweiten Flansches (F2) mindestens einen radialen Vorsprung aufweist, welcher in einem axialen Schlitz (8, 9) des ersten Flansches (F1) geführt ist.

4. Sicherheitseinrichtung nach Anspruch 3 dadurch gekennzeichnet, daß der radiale Vorsprung durch einen in dem zylindrischen Fortsatz (5) befestigten Stift (6, 7) gebildet ist.

5. Sicherheitseinrichtung nach Anspruch 3 oder 4, dadurch gekennzeichnet, daß durch die Zuordnung von radialen Vorsprung und axialen Schlitz (8, 9) die Vorspannung mindestens einer zwischen dem ersten Flansch (F1) und dem zweiten Flansch (F2) angeordneten Druckfeder (11) festgelegt ist.

6. Sicherheitseinrichtung nach einen der Ansprüche 2 bis 5, dadurch gekennzeichnet, daß zwischen dem erstan Flansch (F1) und den zweiten Flansch (F2) in glaichmäßiger Teilung in Umfangsrichtung mindestens vier vorgespannte Druckfedarn (11) angeordnet sind.

7. Sicherheitseinrichtung nach Anspruch 6, dadurch gekennzeichnet, daß die Druckfedern (11) in Sacklöchern (10) des ersten Flansches (F1) und/odar des zweiten Flansches (F2) gehalten sind.

8. Sicharheitseinrichtung nach einem der Ansprüche 2 bis 7, dadurch gekennzeichnet, daß die weitere Schalteinrichtung zum Ausschalten des Industrieroboters in dem ersten Flansch (F1) befestigt und durch eine axiale Verschiebung des zylindrischen Fortsatzes (5) des zweiten Flansches (F2) batätigbar ist.

9. Sicherheitseinrichtung nach Anspruch 8, dadurch gekennzeichnet, daß die weitere Schalteinrichtung als induktiver Näherungsschalter (14) ausgebildet ist.

10. Sicherheitseinrichtung nach den Ansprüchen 5 oder 4 und 9, dadurch gekennzeichnet, daß die weitere Schalteinrichtung durch den radielen Vorsprung das zylindrischen Fortsatzes (5) des zweitan Flansches (F2) betätigbar ist.

17. Sicherheitseinrichtung nach einem der Ansprüche 2 bis 10, dadurch gekennzeichnet, daß der zylindrische Fortsatz (5) des zweiten Flansches (F2) als Hohlzylinder ausgebildet ist, in welchem eine vorgespannte, an dem zylindrischen Fortsatz (5) und an einem kippbaren drittan Flansch (F3) angreifende Zugfeder (15) angeordnet ist.

12. Sicherheitseinrichtung nach Anspruch 11, dadurch gekennzeichnet, daß die Zugfeder (15) an einem in den Hohlzylinder ragenden Spannbügel (18) des kippbaren dritten Flansches (F3) angreift.

13. Sicherheitseinrichtung nach Anspruch 11 oder 12, dadurch gekennzeichnet, daß der Vorspannungsweg dar Zugfeder (15) im Vergleich zu ihrer zusätzlichen Dehnung bei einer Kippbewegung des dritten Flansches (F3) groß ist.

14. Sicherheitseinrichtung nach einam der Ansprüche 17 bis 13, dadurch gekennzeichnet, daß in dem zweiten Flansch (F2) mindestens zwei Fixierstifte (19) befestigt sind, deren konisch verjüngte Enden in Fixierbohrungen (20) des kippbaren dritten Flansches (F3) eingreifen.

15. Sicherheitseinrichtung nach einem der Ansprüche 11 bis 14, dadurch gekennzeichnet, daß die Schalteinrichtung zum Ausschalten des Industrieroboters in dem zweiten Flansch (F2) befestigt und durch einen mittig in dem kippbaren dritten Flansch (F3) befastigten Betätigungsstift (21) betätigbar ist.

16. Sicherheitseinrichtung nach Anspruch 15, dadurch gekennzeichnet, daß der Betätigungsstift (21) in axialer Richtung einstellbar in dem kippbaren dritten Flansch (F3) befestigt ist.

17. Sicherheitseinrichtung nach Anspruch 15 oder 16, dadurch gekennzeichnet, daß die Schalteinrichtung als induktiver Näherungsschalter (22) ausgebildet ist.

18. Sicherheitseinrichtung nach einem der Ansprüche 2 bis 17, dadurch gekennzeichnet, daß der erste Flansch (F1) unmittelbar mit einem Flansch (7) des Industrieroboters verbundan ist.

19. Sicherheitseinrichtung nach einem der Ansprüche 11 bis 18, dadurch gekennzeichnet, daß der kippbare dritte Flansch (F3) unmittelbar mit einem Flansch (2) des Werkzeugs (3) verbunden ist.

## Claims

1. Safety device for industrial robots to provide protection against collisions of a tool attached to the industrial robot, wherein
- the connection between the industrial robot and the tool is made by means of at least three flanges (F1, F2, F3) connected flexibly to one another,
- two of the flanges (F2, F3) are tiltable relative to one another above a particular transverse force (Q) exerted on the tool (3),
- another two of the flanges (F1, F2) are shiftable relative to one another in the axial direction, counter to the force of at least one prestressed compression spring (11), above a particular longitudinal force (L) exerted on the tool (3),
- as a result of a tilting movement, a first switching means can be actuated in order to switch off the industrial robot, and
- as a result of an axial shift, a further switching means can be actuated in order to switch off the industrial robot.

2. Safety device according to Claim 1, characterized in that a first flange (F1) possesses an axial guide bore (4), in which a cylindrical extension (5) of a second flange (F2) is arranged so as to be axially shiftable.

3. Safety device according to Claim 2, characterized in that the cylindrical extension (5) of the second flange (F2) has at least one radial projection which is guidedin an axial slot (8, 9) in the first flange (F1).

4. Safety device according to Claim 3, characterized in that the radial projection is formed by a pin (6, 7) fastened in the cylindrical extension (5).

5. Safety device according to Claim 3 or 4, characterized in that the prestress of at least one compression spring (11) arranged between the first flange (F1) and the second flange (F2) is determined as a result of the relative arrangement of the radial projection and axial slot (8, 9) in relation to one another.

6. Safety device according to one of Claims 2 to 5, characterized in that at least four prestressed compression springs (11) are arranged at a uniform spacing in the peripheral direction between the first flange (F1) and the second flange (F2).

7. Safety device according to Claim 6, characterized in that the compression springs (11) are held in blind holes (10) in the first flange (F1) and/or the second flange (F2).

8. Safety device according to one of Claims 2 to 7, characterized in that the further switching means for switching off the industrial robot is fastened in the first flange (F1) and is actuable as a result of an axial shift of the cylindrical extension (5) of the second flange (F2).

9. Safety device according to Claim 8, characterized in that the further switching means is designed as an inductive proximity switch (14).

10. Safety device according to Claims 3 or 4 and 9, characterized in that the further switching means is actuable by the radial projection of the cylindrical extension (5) of the second flange (F2).

11. Safety device according to one of Claims 2 to 10, characterized in that the cylindrical extension (5) of the second flange (F2) is designed as a hollow cylinder, in which is arranged a prestressed tension spring (15) engaging on the cylindrical extension (5) and on a tiltable third flange (F3).

12. Safety device according to Claim 11, characterized in that the tension spring (15) engages on a clamping bracket (18) projecting into the hollow cylinder and located on the tiltable third flange (F3).

13. Safety device according to Claim 11 or 12, characterized in that the prestressing excursion of the tension spring (15) is large in comparison with its additional extension in response to a tilting movement of the third flange (F3).

14. Safety device according to one of Claims 11 to 13, characterized in that fastened in the second flange (F2) are at least two locating pins (19), the conically tapered ends of which engage into locating bores (20) in the tiltable third flange (F3).

15. Safety device according to one of Claims 11 to 14, characterized in that the switching means for switching off the industrial robot is fastened in the second flange (F2) and is actuable by an actuating pin (21) fastened centrally in the tiltable third flange (F3).

16. Safety device according to Claim 15, characterized in that the actuating pin (21) is fastened in the tiltable third flange (F3) so as to be adjustable in the axial direction.

17. Safety device according to Claim 15 or 16, characterized in that the switching means is designed as an inductive proximity switch (22).

18. Safety device according to one of Claims 2 to 17, characterized in that the first flange (F1) is connected directly to a flange (1) of the industrial robot.

19. Safety device according to one of Claims 11 to 18, characterized in that the tiltable third flange (F3) is connected directly to a flange (2) of the tool (3).

## Revendications

1. Dispositif de sécurité pour un robot industriel, destiné à assurer une protection vis-à-vis de collisions d'un outil monté sur le robot industriel, et dans lequel
- la liaison entre le robot industriel et l'outil est réalisée par l'intermédiaire d'au moins trois brides (F1, F2, F3) reliées entre elles d'une manière flexible,
- deux des brides (F2, F3) peuvent basculer l'une par rapport à l'autre à partir d'une force transversale déterminée (Q) appliquée à l'outil (3)
- deux autres des brides (F1, F2) peuvent être déplacées l'une par rapport à l'autre dans la direction axiale, à l'encontre de la force d'au moins un ressort de pression préarmé (11), à partir d'une force longitudinale déterminée (L) appliquée à l'outil (3),
- un premier dispositif de commutation servant à débrancher le robot industriel peut être actionné au moyen d'un mouvement de basculement, et
- un second dispositif de commutation servant à débrancher le robot industriel peut être actionné au moyen d'un déplacement axial.

2. Dispositif de sécurité suivant la revendication 1, caractérisé par le fait qu'une première bride (F1) possède un perçage axial de guidage (4), dans lequel un prolongement cylindrique d'une seconde bride (F2) est disposé de manière à être déplaçable axialement.

3. Dispositif de sécurité suivant la revendication 2, caractérisé par le fait que le prolongement cylindrique (5) de la seconde bride (F2) possède au moins une partie saillante radiale qui est guidée dans une fente axiale (8, 9) de la première bride (F1).

4. Dispositif de sécurité suivant la revendication 3, caractérisé par le fait que la partie saillante radiale est formée par une tige (6, 7) fixée dans le prolongement cylindrique (5).

5. Dispositif de sécurité suivant la revendication 3 ou 4, caractérisé par le fait que le préarmement d'au moins un ressort de pression (11) disposé entre la première bride (F1) et la seconde bride (F2), est déterminée par la partie saillante radiale et la fente axiale (8, 9).

6. Dispositif de sécurité suivant l'une des revendications 2 à 5, caractérisé par le fait qu'au moins quatre ressorts de pression préarmés (11) sont disposés entre la première bride (F1) et la seconde bride (F2), en étant répartis de façon uniforme dans la direction circonférentielle.

7. Dispositif de sécurité suivant la revendication 6, caractérisé par le fait que les ressorts de pression (11) sont maintenus dans des trous borgnes (10) de la première bride (F1) et/ou de la seconde bride (F2).

8. Dispositif de sécurité suivant l'une des revendications 2 à 7, caractérisé par le fait que le second dispositif de commutation servant à débrancher le robot industriel est fixé dans la première bride (F1) et peut être actionné sous l'effet d'un déplacement axial du prolongement cylindrique (5) de la seconde bride (F2).

9. Dispositif de sécurité suivant la revendication 8, caractérisé par le fait que le second dispositif de commutation est réalisé sous la forme d'un interrupteur inductif de proximité (14).

10. Dispositif de sécurité suivant les revendications 3 ou 4 et 9, caractérisé par le fait que le second dispositif de commutation peut être actionné au moyen de la partie saillante radiale du prolongement cylindrique (5) de la seconde bride (F2).

11. Dispositif de sécurité suivant l'une des revendications 2 à 10, caractérisé par le fait que le prolongement cylindrique (5) de la seconde bride (F2) est réalisé sous la forme d'un cylindre creux, dans lequel se trouve disposé un ressort de traction préarmé (15) qui s'accroche sur le prolongement cylindrique (5) et sur une troisième bride (F3) pouvant basculer.

12. Dispositif de sécurité suivant la revendication 11, caractérisé par le fait que le ressort de traction (15) s'accroche sur un étrier de serrage (18), qui fait saillie dans le cylindre creux, de la troisième bride (F3) pouvant basculer.

13. Dispositif de sécurité suivant la revendication 11 ou 12, caractérisé par le fait que la course de préarmement du ressort de traction (15) est importante par rapport à son allongement supplémentaire dans le cas d'un mouvement de basculement de la troisième bride (F3).

14. Dispositif de sécurité suivant l'une des revendications 11 à 13, caractérisé par le fait que dans la seconde bride (F2) se trouvent fixées au moins deux tiges de fixation (19), dont les extrémités amincies coniquement s'engagent dans des perçages de fixation (20) de la troisième bride (F3) pouvant basculer.

15. Dispositif de sécurité suivant l'une des revendications 11 à 14, caractérisé par le fait que le dispositif de commutation servant à débrancher le robot industriel est fixé dans la seconde bride (F2) et peut être actionné par la tige d'actionnement (21) fixée en position centrée dans la troisième bride (F3) pouvant basculer.

16. Dispositif de sécurité suivant la revendication 15, caractérisé par le fait que la tige d'actionnement (21) est fixée de manière à être réglable dans la direction axiale, dans la troisième bride (F3) pouvant basculer.

17. Dispositif de sécurité suivant la revendication 15 ou 16, caractérisé par le fait que le dispositif de commutation est réalisé sous la forme d'un interrupteur inductif de proximité (22).

18. Dispositif de sécurité suivant l'une des revendications 2 à 17, caractérisé par le fait que la première bride (F1) est reliée directement à une bride (1) du robot industriel.

19. Dispositif de sécurité suivant l'une des revendications 11 à 18, caractérisé par le fait que la troisième bride (F3) pouvant basculer est reliée directement à une bride (2) de l'outil (3).